(19)

Europäisches
Patentamt
European
Patent Office
Office européen
des brevets

(11) **EP 4 546 687 A1**

(12) **EUROPEAN PATENT APPLICATION**
published in accordance with Art. 153(4) EPC

(43) Date of publication:
**30.04.2025 Bulletin 2025/18**

(21) Application number: **22947298.0**

(22) Date of filing: **22.06.2022**

(51) International Patent Classification (IPC):
**H04L 5/00** *(2006.01)*     **H04W 72/00** *(2023.01)*

(86) International application number:
**PCT/CN2022/100580**

(87) International publication number:
**WO 2023/245521 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **ZHU, Yajun
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR DETERMINING LOCATION INFORMATION OF CONTROL
RESOURCE**

(57)     Disclosed in the embodiments of the present disclosure are a method and apparatus for determining location information of a control resource, which can be applied to a communication sy stem. When executed by means of a terminal, the method comprises: according to a specified offset value, determining location information of a control resource that corresponds to control informa-tion to be detected, wherein the control information is used for scheduling a multi-cell or multi-carrier data transmission. By implementing the method in the present disclosure, a terminal can effectively realize accurate detection of control information for multi-cell scheduling, thereby reducing the probability of congestion of control information on different cells or carriers.

FIG. 2

first indication information sent by a network device is received, the first indication information being used to indicate the predetermined offset value — 301

second instruction information sent by the network device is received — 302

location information of multiple control resources corresponding to the control information to be detected for scheduling data transmission of each cell is determined according to the correspondence relationship between each cell and a predetermined offset value and the multiple predetermined offset values indicated by the first indication information — 303

**Description**

**TECHNICAL FIELD**

The disclosure relates to the field of communication technologies, in particular to a method and device for determining location information of a control resource.

**BACKGROUND**

In a communication system, in order to save the overhead of control signaling, it is proposed that data transmission of multi-cell or multi-carrier can be scheduled through one control information. Since the control information can schedule the data transmission of multi-cell or multi-carrier, how to determine location information of the control information is a problem that needs to be solved urgently.

**SUMMARY**

Embodiments of the present disclosure provide a method and device for determining location information of a control resource, which are applicable in the communication field and can effectively enable a terminal to accurately detect the control information for multi-cell or multi-carrier scheduling, reducing a probability of control information congestion on the different cells or carriers.

In a first aspect, embodiments of the present disclosure provide a method for determining location information of a control resource. The method includes: determining, according to a predetermined offset, location information of a control resource corresponding to control information to be detected, the control information being used for scheduling data transmission of multi-cell or multi-carrier.

According to the present disclosure, the accuracy of the terminal in detecting scheduling information can be effectively improved, and since the scheduling information is detected on the determined scheduled cell or scheduled carrier, the probability of congestion in control information transmitted on different cells or carriers can be reduced, so as to avoid resource waste.

In a second aspect, embodiments of the present disclosure provide another method, the method includes: determining, according to a predetermined offset value, location information of a control resource corresponding to control information to be detected by a terminal, the control information being used to schedule data transmission of multi-cell or multi-carrier for the terminal.

According to the present disclosure, the network device can determine a search space for distributing the control information for scheduling the multi-cell or multi-carrier data transmission according to the predetermined offset value. This contributes to effective realization of joint scheduling of multi-cell or multi-carrier scheduling, and reduces the probability of congestion of control information on different cells or carriers.

In a third aspect, embodiments of the present disclosure provide a communication device that has some or all of the functions of a terminal in implementing the method described in the first aspect. For example, functions of the communication device may have some or all of the functions in the embodiments of the present disclosure, or may have the function of independently implementing any of the embodiments of the present disclosure. The functions may be implemented by hardware, or may be implemented by hardware executing corresponding software. The hardware or software includes one or more units or modules corresponding to the above functions.

In an implementation, the structure of the communication device may include a transceiver module and a processing module, and the processing module is configured to support the communication device to perform corresponding functions in the above method. The transceiver module is configured to support communication between the communication device and other devices. The communication device may further include a storage module coupled to the transceiver module and the processing module, which stores necessary computer programs and data for the communication device.

As an example, the processing module may be a processor, the transceiver module may be a transceiver or a communication interface, and the storage module may be a memory.

In the fourth aspect, embodiments of the present disclosure provide another communication device that has some or all of the functions of the network device in the method described in the second aspect. For example, functions of the communication device may have some or all of the functions in the embodiments of the present disclosure, or may have the function of independently implementing any of the embodiments of the present disclosure. The functions may be implemented by hardware, or may be implemented by hardware executing corresponding software. The hardware or software includes one or more units or modules corresponding to the above functions.

In an implementation, the structure of the communication device may include a transceiver module and a processing module, and the processing module is configured to support the communication device to perform corresponding functions in the above method. The transceiver module is configured to support communication between the communication device and other devices. The communication device may further include a storage module coupled to the transceiver module and the processing module, which stores necessary computer programs and data for the communication device.

In a fifth aspect, embodiments of the present disclosure provide a communication device. The communication device includes a processor. When the processor calls a computer program in a memory, the method described in the first aspect is performed.

In a sixth aspect, embodiments of the present disclosure provide a communication device. The communication device includes a processor. When the processor calls a computer program in a memory, the method described in the second aspect is performed.

In a seventh aspect, embodiments of the present disclosure provide a communication device. The communication device includes a processor and a memory. A computer program is stored in the memory. The processor executes the computer program stored in the memory, to cause the communication device to perform the method described in the first aspect above.

In an eighth aspect, embodiments of the present disclosure provide a communication device. The communication device includes a processor and a memory. A computer program is stored in the memory. The processor executes the computer program stored in the memory, to cause the communication device to perform the method described in the second aspect above.

In a ninth aspect, embodiments of the present disclosure provide a communication device. The device includes a processor and an interface circuit. The interface circuit is configured to receive code instructions and transmit the code instructions to the processor. The processor is configured to run the code instructions to cause the device to perform the method described in the first aspect.

In a tenth aspect, embodiments of the present disclosure provide a communication device. The device includes a processor and an interface circuit. The interface circuit is configured to receive code instructions and transmit the code instructions to the processor. The processor is configured to run the code instructions to cause the device to perform the method described in the second aspect above.

In an eleventh aspect, embodiments of the present disclosure provide a scheduling information detection system. The system includes the communication device described in the third aspect and the communication device described in the fourth aspect; or the system includes the communication device described in the fifth aspect and the communication device described in the sixth aspect; or the system includes the communication device described in the seventh aspect and the communication device described in the eighth aspect; or the system includes the communication device described in the ninth aspect and the communication device described in the tenth aspect.

In a twelfth aspect, embodiments of the present disclosure provide a computer-readable storage medium for storing instructions used by the above-mentioned terminal. When the instructions are executed, the terminal is caused to perform the method described in the first aspect above.

In a thirteenth aspect, embodiments of the present disclosure provide a readable storage medium for storing instructions used by the above-mentioned network device. When the instructions are executed, the network device is caused to perform the method described in the second aspect above.

In a fourteenth aspect, the present disclosure further provides a computer program product including a computer program that, when being run on a computer, causes the computer to execute the method described in the first aspect above.

In a fifteenth aspect, the present disclosure further provides a computer program product including a computer program that, when being run on a computer, causes the computer to execute the method described in the second aspect above.

In a sixteenth aspect, the present disclosure provides a chip system, which includes at least one processor and an interface for supporting the terminal to implement the functions involved in the first aspect, for example, determining or processing the data and information involved in the above method. In a possible design, the chip system further includes a memory, and the memory is configured to store necessary computer programs and data for the terminal. The chip system may be composed of chips, or may include chips and other discrete devices.

In a seventeenth aspect, the present disclosure provides a chip system, which includes at least one processor and an interface for supporting the network device to implement the functions involved in the second aspect, for example, determining or processing the data and information involved in the above method. In a possible design, the chip system further includes a memory, and the memory is configured to store necessary computer programs and data for network device. The chip system may be composed of chips, or may include chips and other discrete devices.

In an eighteenth aspect, the present disclosure provides a computer program that, when being run on a computer, causes the computer to execute the method described in the first aspect above.

In a nineteenth aspect, the present disclosure provides a computer program that, when being run on a computer, causes the computer to execute the method described in the second aspect above.

## BRIEF DESCRIPTION OF THE DRAWINGS

In order to more clearly explain technical solutions in the embodiments of the present disclosure or the background technology, drawings required to be used in the embodiments or the background technology of the present disclosure will be described below.

Figure 1 is a schematic architectural diagram of a communication system provided by an embodiment of the present disclosure.

Figure 2 is a schematic flowchart of a method for determining location information of a control resource provided by an embodiment of the present disclosure.

Figure 3 is a schematic flowchart of another method for determining location information of a control resource provided by an embodiment of the present disclosure.

Figure 3a is a schematic flowchart of another method for determining location information of a control resource provided by an embodiment of the present disclosure.

Figure 4 is a schematic flowchart of another method for determining location information of a control resource provided by an embodiment of the present disclosure.

Figure 5 is a schematic flowchart of yet another method for determining location information of a control resource provided by an embodiment of the present disclosure.

Figure 6 is a schematic flowchart of yet another method for determining location information of a control resource provided by an embodiment of the present disclosure.

Figure 7 is a schematic flowchart of yet another method for determining location information of a control resource provided by an embodiment of the present disclosure.

Figure 8 is a schematic structural diagram of a communication device provided by an embodiment of the present disclosure.

Figure 9 is a schematic structural diagram of another communication device provided by an embodiment of the present disclosure.

Figure 10 is a schematic structural diagram of a chip provided by an embodiment of the present disclosure.

## DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present disclosure. Rather, they are merely examples of apparatus and methods consistent with aspects of the disclosure as detailed in the appended claims.

The terms used in the disclosure are only for the purpose of describing specific embodiments, and are not intended to limit the embodiments of the disclosure. The singular forms of "a", "an", and "the" used in the embodiments of the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining that". For the purposes of brevity and ease of understanding, terms used in the disclosure for characterizing a size relationship are "greater than" or "less than", "higher than" or "lower than", and for those skilled in the art, it can be understood that the term "greater than" covers the meaning of "greater than or equal to", "less than" covers the meaning of "less than or equal to", the term "higher than" covers the meaning of "higher than or equal to", and "less than" covers the meaning of "less than or equal to".

To facilitate understanding, terms involved in the present disclosure are first introduced.

1. Search Space (SS)

The SS consists of several groups of Physical Downlink Control Channel (PDCCH) candidates. A terminal monitors transmission of control information carried on a CORESET associated with the search space, in order to detect downlink control information (DCI) related to it.

2. PDCCH

The PDCCH is a set of physical resource particles that carry uplink and downlink control information. The PDCCH carried information, according to its different scopes, can be divided into common control information (common search space) and specific control information (specific search space). The search space defines a starting location of blind detection and a channel search method. The PDCCH mainly carries control information (DCI) of a physical uplink shared channel (PUSCH) and a physical downlink shared channel (PDSCH). PDCCH candidates of different terminals are distinguished by their corresponding radio network temporary identity (RNTI) information. A basic resource unit that carries the DCI information is a control channel element (CCE).

For a PDCCH candidate, one CCE may not be able to fully carry control information in some DCI formats, and thus multiple CCEs are needed. Therefore, the protocol proposes the concept of aggregation level (AL). The AL number is equal to the total number of CCEs of the PDCCH candidate.

In a new radio (NR) system, due to a large system bandwidth, a control resource set (CORESET) is introduced. The terminal needs to know a location of the PDCCH in a frequency domain and in a time domain to successfully decode the PDCCH. The NR system encapsulates information such as a frequency band occupied by the PDCCH in the frequency domain and an Orthogonal Frequency Division Multiplexing (OFDM) symbol number occupied by the PDCCH in the time domain in the CORESET; and a PDCCH starting OFDM symbol number and a PDCCH monitoring period and other information are encapsulated in the search space. Based on the combination of the search space and CORESET parameters, the specific location of the PDCCH candidate in the time-frequency domain can be determined.

3. Multi-carrier scheduling/multi-cell scheduling

The multi-carrier scheduling/multi-cell scheduling refers to scheduling data transmission on multiple cells or multiple carriers through one DCI.

In order to better understand a method for determining location information of a control resource disclosed in the embodiments of the present disclosure, the communication system to which an embodiment of the present disclosure is applicable is first described below.

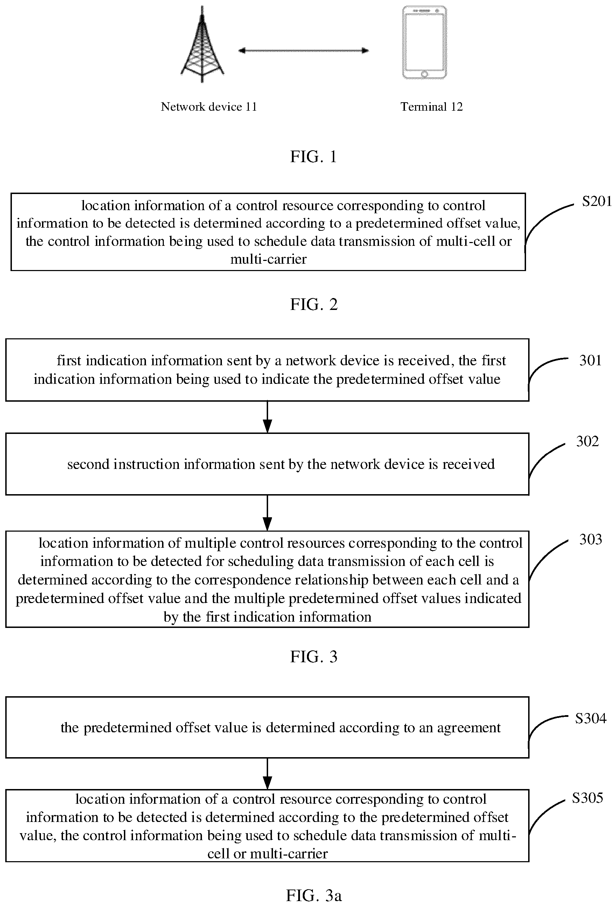

Referring to Figure 1, which is a schematic architectural diagram of a communication system provided by an embodiment of the present disclosure. The communication system may include but is not limited to one network device and one terminal. The number and form of devices shown in Figure 1 are only for examples and do not constitute a limitation on the embodiments of the present disclosure. In practical applications, two or more network devices, and/or two or more terminals may be included. The communication system shown in Figure 1 includes one network device 11 and one terminal 12 as an example.

It should be noted that the technical solutions of the embodiments of the present disclosure are applicable to various communication systems. For example, a long term evolution (LTE) system, a fifth generation (5th generation, 5G) mobile communication system, a 5G new radio (NR) system, or other future new mobile communication systems. It should also be noted that a sidelink in the embodiments of the present disclosure may also be called a side link.

The network device 11 in the embodiments of the present disclosure is an entity on the network side that is used to transmit or receive signals. For example, the network device 11 may be an evolved evolved NodeB (eNB), a transmission reception point (TRP), a next generation NodeB (gNB) in an NR system, a base station in other future mobile communication systems, or access point in a wireless fidelity (WiFi) system, etc. The embodiments of the present disclosure do not limit the specific technology and specific device form used by the network device. The network device provided by the embodiments of the present disclosure may be composed of a centralized unit (CU) and a distributed unit (DU). The CU may also be called a control unit (control unit). The structure of CU-DU can separate protocol layers of the network device, such as a base station, and place some protocol layer functions on the CU for centralized control, the remaining part or all protocol layer functions are distributed in the DU, and the CU centrally controls the DU.

The terminal 12 in the embodiments of the present disclosure is an entity on the user side that is used to receive or transmit signals, such as a mobile phone. The terminal may also be called as a terminal device, a user equipment (UE), a mobile station (MS), a mobile terminal (MT), etc. The terminal may be a car with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form used by the terminal.

It can be understood that the communication system described in the embodiment of the present disclosure is to more clearly illustrate the technical solutions of the embodiments of the present disclosure, and does not constitute a limitation on the technical solutions provided by the embodiments of the present disclosure. As those of ordinary skill in the art will know, with the evolution of system architecture and the emergence of new business scenarios, the technical solutions provided in the embodiments of the present disclosure are also applicable to similar technical problems. Usually, in a case of cross-carrier scheduling, there is an offset value between a search space of a scheduled cell or carrier and a search space of a cell or carrier carrying the scheduling instruction. The offset value can usually be determined based on a value of a carrier indication field (CIF) of the scheduled cell or carrier. The terminal can determine the search space for the control information of cross-carrier scheduling based on the offset value, and then perform blind detection in the search space, and the downlink control information related to it can be detected.

For a case where data transmission of multi-cell or multi-carrier is scheduled through a piece of control information, the present disclosure proposes a method that can accurately determine the search space for scheduling control information of multi-cell or multi-carrier, so that the terminal can accurately and effectively detect the control information used for multi-cell or multi-carrier data transmission scheduling within the search space, so as to schedule the multi-cell or multi-carrier data transmission, which reduces the probability of congestion of the control information on different cells or different carriers.

It should be noted that a method for determining location information of a control resource provided in any embodiment of the present disclosure can be performed alone, or can be performed in combination with possible implementations in other embodiments, or can be performed in combination with any method in related art.

The methods and apparatuses for determining location information of a control resource provided by the present disclosure will be introduced in detail below with reference to the accompanying drawings.

Referring to Figure 2, which is a schematic flowchart of a method for determining location information of a control resource provided by an embodiment of the present disclosure. The method for determining location information of a control resource is performed by a terminal, as shown in Figure 2. The method may include but is not limited to the following steps.

S201, location information of a control resource corresponding to control information to be detected is determined according to a predetermined offset value, the control information being used to schedule data transmission of multi-cell or multi-carrier.

In the present disclosure, the multi-cell schedule by the control information may be multiple cell groups, or may be multiple cells in a cell group, or may be multiple cells in multiple cell groups, or may be multiple carriers, or multiple carrier groups, etc., which is not limited in the present disclosure.

Usually, before performing blind detection, the terminal needs to first determine a search space corresponding to the control information, that is, to determine a time-frequency domain location of a PDCCH candidate. At this time, in addition to determining the time-frequency domain information, it also needs to determine the location information of the control resource corresponding to the PDCCH candidate, such as a starting location, that is, to determine a sequence number of a starting CCE. The time-frequency domain information corresponding to the search space can be determined by parsing corresponding CORESET and search space parameters. Therefore, in the present disclosure, when the terminal determines the search space of the control channel to be detected, it may first determine the location information of the control resource corresponding to the control information to be detected, that is, a sequence number of the starting CCE corresponding to the control information to be detected, or sequence numbers of all CCEs corresponding to the control information to be detected.

Optionally, in the present disclosure, the terminal may determine a sequence number of a CCE corresponding to the control information to be detected based on the predetermined offset value, and then determine a specific time-frequency domain location of the search space based on the determined sequence number of the CCE.

Optionally, the terminal may determine the predetermined offset value according to an indication from a network device or according to an agreement.

Optionally, the terminal may calculate the sequence number of the CCE according to a following formula:

$$L \times \left\{ \left( Y_{p,n_{s,f}^{\mu}} + \left\lfloor \frac{m_{s,n_{CI}} \times N_{CCE,p}}{L \times M_{s,max}^{(L)}} \right\rfloor + offset \right) \bmod \left\lfloor \frac{N_{CCE,P}}{L} \right\rfloor \right\} + i$$

where the L is an aggregation level of a PDCCH;

the Y is a frequency domain starting location of a PDCCH candidate. For a common search space, $Y_{p,n_{s,f}^{\mu}} = 0$. For a terminal-specific search space, $Y_{p,n_{s,f}^{\mu}} = (A_p \times Y_{p,n_{s,f-1}^{\mu}}) \bmod D$, and $Y_{p,-1} = N_{rnti} \neq 0$, D=65537, in which $N_{rnti}$ is an RNTI value of a cell; For the $A_p$, when p mod 3=0, $A_p$=39827, when p mod 3=1, $A_p$=39829, and when p mod 3=2, $A_p$=39839;

the $N_{CCE,p}$ is a number of CCEs in a CORESET p;

the offset is a predetermined offset value;

for the $n_{CI}$, if the terminal is configured with a carrier indication field (CIF) through a cross-carrier configuration for a serving cell on which the PDCCH is monitored, then the $n_{CI}$ is a carrier indication field value; otherwise, for any common search space, the $n_{CI} = 0$. The i is a CCE index within the aggregation level L, and i=0, ..., L-1;

the $m_{s,n_{ci}}$ represents the number of PDCCH candidate sets corresponding to the $n_{CI}$ and the search space for the aggregation level L; and

the $M_{s,max}^{(L)}$ is the maximum number of candidate sets on a CORESET p, for an aggregation level L of a search space s.

In the present disclosure, the predetermined offset value may be the same as the value of $n_{CI}$, or may be different from the value of $n_{CI}$. In other words, the predetermined offset value may be a parameter as same as the $n_{CI}$, or it may be a parameter different from the $n_{CI}$. This is not limited in the present disclosure.

In the present disclosure, the terminal can determine the location information of the control resource corresponding to the control information to be detected that is used to schedule the data transmission of the multi-cell or multi-carrier according to the predetermined offset value. As a result, it is effectively realized that the terminal can detect the control information used for multi-cell or multi-carrier scheduling, which reduces the probability of congestion of control information on different cells or carriers.

Referring to FIG. 3, which is a flow chart of another method for determining location information of a control resource provided by an embodiment of the present disclosure. The method is performed by the terminal, and includes but is not limited to the following steps.

S301, first indication information sent by a network device is received, the first indication information being used to indicate the predetermined offset value.

Optionally, the terminal may receive the first indication information through a high-level signaling, such as a radio resource control (RRC) message; or it may also receive the first indication information through a media access control (MAC) control element (CE); or it may also receive the first indication information through a physical layer signaling, which is not limited in the present disclosure.

Optionally, the first indication information may indicate one or more predetermined offset values.

In an implementation, if the first indication information received by the terminal indicates one offset value, the location information of the control resource corresponding to the control information to be detected may be determined. That is, in this case, the terminal may determine that the location information of control resources corresponding to the control information to be detected being scheduled for multiple cells in different cell groups or multiple carriers in different carrier groups is the same.

S302, second instruction information sent by the network device is received.

The second indication information is used to indicate at least one of: a correspondence relationship between each cell and a predetermined offset value, a correspondence relationship between each cell group and a predetermined offset value, a correspondence relationship between each carrier and a predetermined offset value, or a correspondence relationship between each carrier group and a predetermined offset value.

Optionally, the network device may indicate the correspondence relationship between each cell and/or each carrier and the predetermined offset value to the terminal through a high-layer signaling, such as an RRC message, a MAC CE or a physical layer signaling. Therefore, if the first indication information received by the terminal indicates multiple offset values, it may determine the predetermined offset values corresponding to the different cell (cell groups) and carriers (carrier groups), according to the correspondence relationship between the respective predetermined offset values and the cells (cell groups) and carriers (carrier groups).

Optionally, the second indication information may also indicate a correspondence relationship between each cell group and a predetermined offset value, that is, the predetermined offset value corresponding to multiple cells in the same cell group is the same.

In a possible implementation, S302 may be executed before S301 or simultaneously with S301, that is, the first indication information and the second indication information are indicated through the same high-level signaling, which is not limited in the present disclosure.

S303, location information of multiple control resources corresponding to the control information to be detected for scheduling data transmission of each cell is determined according to the correspondence relationship between each cell and a predetermined offset value and the multiple predetermined offset values indicated by the first indication information.

The location information of the control resource may be a starting location of a CCE, that is, a sequence number of the starting CCE. Alternatively, it may also be locations of all CCEs, that is, serial numbers of all CCEs.

For example, the second indication information indicates that cell group 1 corresponds to offset 1, cell group 2 corresponds to offset 2, and cell group 3 corresponds to offset 3. Then, when the first indication information received by the terminal includes offset 1 and offset 3, the sequence number of the starting CCE and/or the sequence numbers of all CCEs corresponding to the control information to be detected for scheduling the cell group 1 and cell group 3 can be determined according to the preset correspondence relationship and the first indication information. That is, the sequence number of the starting CCE and/or the sequence numbers of all CCEs corresponding to the control information used to schedule cell group 1 is determined based on offset 1, and the sequence number of the starting CCE and/or the sequence numbers of all CCEs corresponding to the control information used to schedule cell group 3 is determined based on offset 3.

Optionally, if the multiple predetermined offset values indicated by the first indication information respectively correspond to multiple carriers (groups), the terminal may also determine the location information of the control resource corresponding to the control information to be detected being used to schedule the data transmission of each carrier, according to the correspondence relationship between each carrier and the predetermined offset value and the multiple predetermined offset values indicated by the first indication information.

For example, the second indication information indicates that carrier group 1 corresponds to offset 1, carrier group 1 corresponds to offset 2, and carrier group 3 corresponds to offset 3. Then, when the first indication information received by the terminal includes offset 1 and offset 3, the sequence number of the starting CCE and/or the sequence numbers of all CCEs corresponding to the control information to be detected for scheduling carrier group 1 and carrier group 3 may be determined according to the preset correspondence relationship and the first indication information. That is, the sequence number of the starting CCE and/or the sequence numbers of all CCEs corresponding to the control information used to schedule carrier group 1 is determined based on offset 1, and the sequence number of the starting CCE and/or the sequence numbers of all CCEs corresponding to the control information used to schedule cell group 3 is determined based on offset 3.

Alternatively, if the multiple predetermined offset values indicated by the first indication information include both the offset value corresponding to the cell group and the offset value corresponding to the carrier, the terminal may determine the sequence numbers of the CCEs of the search spaces respectively corresponding to the corresponding cell group and carrier, according to the correspondence relationship indicated in the second indication information and the multiple predetermined offset values indicated by the first indication information.

The specific implementation of determining the sequence number of the CCE based on the predetermined offset value can be referred to the detailed description of any embodiment of the present disclosure, and will not be described again here.

In the present disclosure, the terminal can determine the location information of the control resource corresponding to the control information to be detected for scheduling the multi-cell based on the correspondence relationship between each predetermined offset value and the cell and the multiple predetermined offset values indicated by the network device. As a result, it is effectively realized that the terminal can accurately detect the control information used for multi-cell scheduling, which reduces the probability of congestion of control information on different cells or carriers.

Referring to Figure 3a, which is a flow chart of another method for determining location information of a control resource provided by an embodiment of the present disclosure. The method is performed by a terminal and includes but is not limited to the following steps.

S304, the predetermined offset value is determined according to an agreement.

Optionally, the terminal may determine one predetermined offset value or multiple predetermined offset values according to the agreement.

Optionally, the terminal may determine the predetermined offset value corresponding to each cell (cell group) according to the agreement, or it may also determine the predetermined offset value corresponding to each carrier (carrier group). This is not limited in the present disclosure.

S305, location information of a control resource corresponding to control information to be detected is determined according to the predetermined offset value, the control information being used to schedule data transmission of multi-cell or multi-carrier.

For the specific implementation of the above S305, reference can be made to the detailed description of any embodiment of the present disclosure, and will not be described again here.

In the present disclosure, the terminal can first determine the predetermined offset value according to the agreement, and then determine the location information of the control resource corresponding to the control information to be detected for scheduling the multi-cell according to the predetermined offset value. As a result, it is effectively realized that the terminal can accurately detect the control information used for multi-cell scheduling, which reduces the probability of congestion of control information on different cells or carriers.

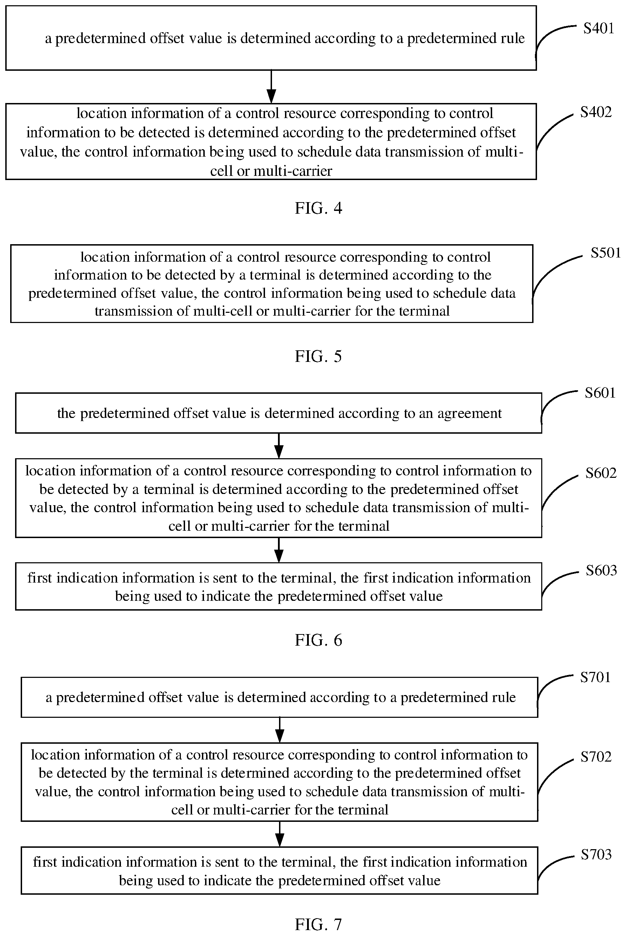

Please refer to FIG. 4, which is a flow chart of another method for determining location information of a control resource provided by an embodiment of the present disclosure. The method is performed by a terminal and includes but is not limited to the following steps.

S401, a predetermined offset value is determined according to a predetermined rule.

Optionally, the terminal may determine a value of a carrier indication field (CIF) of a cell with the smallest identification value among the multiple cells as the predetermined offset value. For example, if the cell identities of the multiple scheduled cells are cell 1, cell 2, and cell 3 respectively, then the CIF value of cell 1 may be determined as the predetermined offset value.

Alternatively, the terminal may also determine a value of a CIF of a cell with the largest identification value among the multiple cells as the predetermined offset value. For example, if the cell identities of the multiple scheduled cells are cell 1, cell 2, and cell 3 respectively, then the CIF value of cell 3 may be determined as the predetermined offset value.

Alternatively, the terminal may also determine a value of a CIF value of a carrier with the smallest identification value among the multiple carriers as the predetermined offset value. For example, if the cell identities of the multiple scheduled cells are carrier 1, carrier 2, and carrier 3, then the CIF value of carrier 1 may be determined as the predetermined offset value.

Alternatively, the terminal may also determine a value of a CIF of a carrier with the largest identification value among the multiple carriers as the predetermined offset value. For example, if the cell identities of the multiple scheduled cells are carrier 1, carrier 2, and carrier 3, then the CIF value of carrier 3 may be determined as the predetermined offset value.

Alternatively, the terminal may also determine a value of a CIF of a cell with the lowest frequency domain location among the multiple cells as the predetermined offset value. For example, the cell identities of the multiple scheduled cells are cell 1, cell 2, and cell 3 respectively, in which the carrier frequency corresponding to cell 1 is 1.4Ghz, the carrier frequency corresponding to cell 2 is 1.6Ghz, and the carrier frequency corresponding to cell 3 is 2.0Ghz. That is, the frequency domain location of cell 1 is the lowest, so the CIF value of cell 1 may be determined as the predetermined offset value.

Alternatively, the terminal may also determine a value of a CIF of a carrier with the lowest frequency domain location among the multiple carriers as the predetermined offset value. For example, the cell identities of the multiple scheduled cells are carrier 1, carrier 2, and carrier 3 respectively, in which the carrier frequency corresponding to carrier 1 is 1.4Ghz, the carrier frequency corresponding to carrier 2 is 1.6Ghz, and the carrier frequency corresponding to carrier 3 is 2.0Ghz. That is, the frequency domain location of carrier 1 is the lowest, so the CIF value of carrier 1 may be determined as the predetermined offset value.

Alternatively, the terminal may also determine a value of a CIF of a cell with the highest frequency domain location among the multiple cells as the predetermined offset value. For example, the cell identities of the multiple scheduled cells are cell 1, cell 2, and cell 3 respectively, in which the carrier frequency corresponding to cell 1 is 1.4Ghz, the carrier frequency corresponding to cell 2 is 1.6Ghz, and the carrier frequency corresponding to cell 3 is 2.0Ghz. That is, the frequency domain location of cell 3 is the highest, so the CIF value of cell 3 may be determined as the predetermined offset value.

Alternatively, the terminal may also determine a value of a CIF of a carrier with the highest frequency domain location among the multiple carriers as the predetermined offset value. For example, the cell identities of the multiple scheduled cells are carrier 1, carrier 2, and carrier 3 respectively, in which the carrier frequency corresponding to carrier 1 is 1.4Ghz, the carrier frequency corresponding to carrier 2 is 1.6Ghz, and the carrier frequency corresponding to carrier 3 is 2.0Ghz. That is, the frequency domain location of carrier 3 is the highest, so the CIF value of carrier 3 may be determined as the predetermined offset value.

Optionally, there may be one or more predetermined offset values determined by the terminal according to the predetermined rule.

S402, location information of a control resource corresponding to control information to be detected is determined according to the predetermined offset value, the control information being used to schedule data transmission of multi-cell or multi-carrier.

For the specific implementation of S402, reference can be made to the detailed description of any embodiment of the present disclosure, which will not be described again here.

In the present disclosure, the terminal can first determine the predetermined offset value according to the predetermined rule, and then determine, according to the predetermined offset value, the location information of the control resource corresponding to the control information to be detected for scheduling the data transmission of the multi-cell or multi-carrier. As a result, it is effectively realized that the terminal can accurately detect the control information used for multi-cell or multi-carrier scheduling, which reduces the probability of congestion of control information on different cells or carriers.

Referring to FIG. 5, which is a flow chart of another method for determining location information of a control resource provided by an embodiment of the present disclosure. The method is performed by a network device and includes but is not limited to the following steps.

S501, location information of a control resource corresponding to control information to be detected by a terminal is determined according to the predetermined offset value, the control information being used to schedule data transmission of multi-cell or multi-carrier for the terminal.

In the present disclosure, the multi-cell schedule by the control information may be multiple cell groups, or may be multiple cells in a cell group, or may be multiple cells in multiple cell groups, or may be multiple carriers, or multiple carrier groups, etc., which is not limited in the present disclosure.

Usually, during scheduling, the network device will select an available PDCCH candidate from PDCCH candidates for each terminal to be scheduled, that is, a search space used by the terminal to detect control information, and then the control information to be detected by the terminal can be carried in this search space. When the network device determines the available PDCCH candidates, in addition to determining the time-frequency domain information, it also needs to determine a starting location of the PDCCH candidate, that is, to determine the location information of the control resource corresponding to the control information, for example, a sequence number of a starting CCE.

Optionally, in the present disclosure, the network device may determine the location information of the control resource corresponding to the control information to be detected by the terminal according to the predetermined offset value, that is, determine a sequence number of a starting CCE and/or serial numbers of all CCEs corresponding to the control information to be detected by the terminal.

Optionally, the network device may determine the predetermined offset value according to the agreement or other methods.

Optionally, the network device can calculate the sequence number of the CCE according to a following formula.

$$L \times \left\{ \left( Y_{p,n_{s,f}^\mu} + \left\lfloor \frac{m_{s,n_{CI}} \times N_{CCE,p}}{L \times M_{s,max}^{(L)}} \right\rfloor + offset \right) \bmod \left\lfloor \frac{N_{CCE,P}}{L} \right\rfloor \right\} + i$$

where the L is an aggregation level of a PDCCH;

the Y is a frequency domain starting location of a PDCCH candidate. For a common search space, $Y_{p,n_{s,f}^\mu}$ = 0. For a terminal-specific search space, $Y_{p,n_{s,f}^\mu} = (A_p \times Y_{p,n_{s,f-1}^\mu}) \bmod D$, and $Y_{p,-1} = N_{rnti} \neq 0$, D=65537, in which $N_{rnti}$ is an RNTI value of a cell; For the $A_p$, when p mod 3=0, $A_p$=39827, when p mod 3=1, $A_p$=39829, and when p mod 3=2, $A_p$=39839;

the $N_{CCE,p}$ is a number of CCEs in a CORESET p;

the offset is a predetermined offset value;

for the $n_{CI}$, if the terminal is configured with a carrier indication field (CIF) through a cross-carrier configuration for a serving cell on which the PDCCH is monitored, then the $n_{CI}$ is a carrier indication field value; otherwise, for any common search space, the $n_{CI}$ = 0. The i is a CCE index within the aggregation level L, and i=0, ..., L-1;

the $m_{s,n_{ci}}$ represents the number of PDCCH candidate sets corresponding to the $n_{CI}$ and the search space for the aggregation level L; and

the $M_{s,max}^{(L)}$ is the maximum number of candidate sets on a CORESET p, for an aggregation level L of a search space s.

In the present disclosure, the predetermined offset value may be the same as the value of $n_{CI}$, or may be different from the value of $n_{CI}$. In other words, the predetermined offset value may be a parameter as same as the $n_{CI}$, or it may be a parameter different from the $n_{CI}$. This is not limited in the present disclosure.

In the present disclosure, the network device can determine the location information of the control resource corresponding to the control information to be detected by the terminal for scheduling the multi-cell or multi-carrier data transmission according to the predetermined offset value. This contributes to effective realization of joint scheduling of multi-cell or multi-carrier scheduling, and reduces the probability of congestion of control information on different cells or carriers.

Referring to Figure 6, which is a flow chart of another method for determining location information of a control resource provided by an embodiment of the present disclosure. The method is performed by the network device and includes but is not limited to the following steps.

S601, the predetermined offset value is determined according to an agreement.

Optionally, the network device may also determine the predetermined offset value according to a predetermined rule.

Optionally, the network device may determine one or more predetermined offset values according to an agreement, which is not limited in the present disclosure.

S602, location information of a control resource corresponding to control information to be detected by a terminal is determined according to the predetermined offset value, the control information being used to schedule data transmission of multi-cell or multi-carrier for the terminal.

For the specific implementation of S602, reference can be made to the detailed description of any embodiment of the present disclosure, which will not be described again here.

S603, first indication information is sent to the terminal, the first indication information being used to indicate the predetermined offset value.

Optionally, the first indication information may indicate one or more predetermined offset values.

Optionally, the network device may send the first indication information through a high-level signaling, such as a radio resource control (RRC) message; or, it may also send the first indication information through a media access control (MAC) control element (CE); or, it may send the first indication information through a physical layer signaling, which is not limited in the present disclosure.

In an implementation, if control resource locations corresponding to the control information to be detected scheduled for multiple cells in different cell groups or multiple carriers in different carrier groups are the same, then the network device may indicate one predetermined offset value to the terminal through the first indication information.

Alternatively, if the location information of the control resources corresponding to the control information scheduled for multiple cells or multiple carriers is different, the network device may indicate multiple predetermined offset values to the terminal through the first indication information. Thus, the terminal can accurately determine the location information of the control resource corresponding to the control information for scheduling each cell or each carrier.

Optionally, the network device may also indicate to the terminal in advance the correspondence relationship between each cell or each carrier and a predetermined offset value. For example, second indication information is sent to the terminal, and the second indication information is used to indicate at least one of: a correspondence relationship between each cell and a predetermined offset value, a correspondence relationship between each cell group and a predetermined offset value, a correspondence relationship between each carrier and a predetermined offset value, or a correspondence relationship between each carrier group and a predetermined offset value.

Optionally, the network device may indicate to the terminal the correspondence relationship between each cell (cell group) and/or carrier (carrier group) and a predetermined offset value through a high-layer signaling, such as an RRC message, a MAC CE or a physical layer signaling. Therefore, if the first indication information received by the terminal indicates multiple offset values, the predetermined offset values corresponding to different cells and carriers can be determined based on the correspondence relationship between the respective predetermined offset values and the cells and carriers.

Optionally, the second indication information indicates the correspondence relationship between each cell group and a predetermined offset value, that is, the predetermined offset values corresponding to multiple cells in the same cell group are the same.

In a possible implementation, the network device may first send the first indication information and then the second indication information to the terminal; or the network device may send the second indication information first and then send the first indication information; or the network device may send the first indication information and the second indication information simultaneously, that is, the first indication information and the second indication information are indicated through the same high-level signaling, which is not limited in the present disclosure.

Optionally, S602 may also be performed after S603, or may be performed at the same time as S603, which is not limited in the present disclosure.

In the present disclosure, after the network device determines the predetermined offset value, it can indicate the predetermined offset value to the terminal, and based on the predetermined offset value, determine the location information of the control resource corresponding to the control information to be detected by the terminal for scheduling the multi-cell or multi-carrier data transmission. As a result, it is effectively realized that the terminal can accurately detect the control information used for multi-cell scheduling, which reduces the probability of congestion of control information on different cells or carriers.

Referring to FIG. 7, which is a flow chart of another method for determining location information of a control resource provided by an embodiment of the present disclosure. The method is performed by the network device and includes but is not limited to the following steps.

S701, a predetermined offset value is determined according to a predetermined rule.

Optionally, the network device may determine a value of a carrier indication field (CIF) of a cell with the smallest identification value among the multiple cells as the predetermined offset value. For example, if the cell identities of the multiple scheduled cells are cell 1, cell 2, and cell 3 respectively, then the CIF value of cell 1 may be determined as the predetermined offset value.

Alternatively, the network device may also determine a value of a CIF of a cell with the largest identification value among the multiple cells as the predetermined offset value. For example, if the cell identities of the multiple scheduled cells are cell 1, cell 2, and cell 3 respectively, then the CIF value of cell 3 may be determined as the predetermined offset value.

Alternatively, the network device may also determine a value of a CIF value of a carrier with the smallest identification value among the multiple carriers as the predetermined offset value. For example, if the cell id entities of the multiple scheduled cells are carrier 1, carrier 2, and carrier 3, then the CIF value of carrier 1 may be determined as the predetermined offset value.

Alternatively, the network device may also determine a value of a CIF of a carrier with the largest identification value among the multiple carriers as the predetermined offset value. For example, if the cell identities of the multiple scheduled cells are carrier 1, carrier 2, and carrier 3, then the CIF value of carrier 3 may be determined as the predetermined offset value.

Alternatively, the network device may determine a value of a CIF of a cell with the lowest frequency domain location among the multiple cells as the predetermined offset value. For example, the cell identities of the multiple scheduled cells are cell 1, cell 2, and cell 3 respectively, in which the carrier frequency corresponding to cell 1 is 1.4Ghz, the carrier frequency corresponding to cell 2 is 1.6Ghz, and the carrier frequency corresponding to cell 3 is 2.0Ghz. That is, the frequency domain location of cell 1 is the lowest, so the CIF value of cell 1 may be determined as the predetermined offset value.

Alternatively, the network device may also determine a value of a CIF of a carrier with the lowest frequency domain location among the multiple carriers as the predetermined offset value. For example, the cell identities of the multiple scheduled cells are carrier 1, carrier 2, and carrier 3 respectively, in which the carrier frequency corresponding to carrier 1 is 1.4Ghz, the carrier frequency corresponding to carrier 2 is 1.6Ghz, and the carrier frequency corresponding to carrier 3 is 2.0Ghz. That is, the frequency domain location of carrier 1 is the lowest, so the CIF value of carrier 1 may be determined as the predetermined offset value.

Alternatively, the network device may also determine a value of a CIF of a cell with the highest frequency domain location among the multiple cells as the predetermined offset value. For example, the cell identities of the multiple scheduled cells are cell 1, cell 2, and cell 3 respectively, in which the carrier frequency corresponding to cell 1 is 1.4Ghz, the carrier frequency corresponding to cell 2 is 1.6Ghz, and the carrier frequency corresponding to cell 3 is 2.0Ghz. That is, the frequency domain location of cell 3 is the highest, so the CIF value of cell 3 may be determined as the predetermined offset value.

Alternatively, the network device may also determine a value of a CIF of a carrier with the highest frequency domain location among the multiple carriers as the predetermined offset value. For example, the cell identities of the multiple scheduled cells are carrier 1, carrier 2, and carrier 3 respectively, in which the carrier frequency corresponding to carrier 1 is 1.4Ghz, the carrier frequency corresponding to carrier 2 is 1.6Ghz, and the carrier frequency corresponding to carrier 3 is 2.0Ghz. That is, the frequency domain location of carrier 3 is the highest, so the CIF value of carrier 3 may be determined as the predetermined offset value.

Optionally, there may be one or more predetermined offset values determined by the network device according to the predetermined rule.

S702, location information of a control resource corresponding to control information to be detected by the terminal is determined according to the predetermined offset value, the control information being used to schedule data transmission of multi-cell or multi-carrier for the terminal.

S703, first indication information is sent to the terminal, the first indication information being used to indicate the predetermined offset value.

For the specific implementation of S702 and S703, reference can be made to the detailed description of any embodiment of the present disclosure, and will not be described again here.

In the present disclosure, the network device can first determine the predetermined offset value according to the predetermined rule, and then indicate the predetermined offset value to the terminal, and determine, according to the predetermined offset value, the location information of the control resource corresponding to the control information to be detected by the terminal for scheduling the multi-cell or multi-carrier data transmission. As a result, it is effectively realized that the terminal can accurately detect the control information used for multi-cell or multi-carrier scheduling, which reduces the probability of congestion of control information on different cells or carriers.

In the above embodiments provided by the present disclosure, the methods provided by the embodiments of the present disclosure are introduced from the perspectives of network device and terminal respectively. In order to implement respective functions in the methods provided by the above embodiments of the present disclosure, the network device and the terminal may include hardware structures and software modules to implement the above functions in the form of hardware structures, software modules, or hardware structures plus software modules. A certain function among the above functions can be executed by a hardware structure, a software module, or a hardware structure plus a software module.

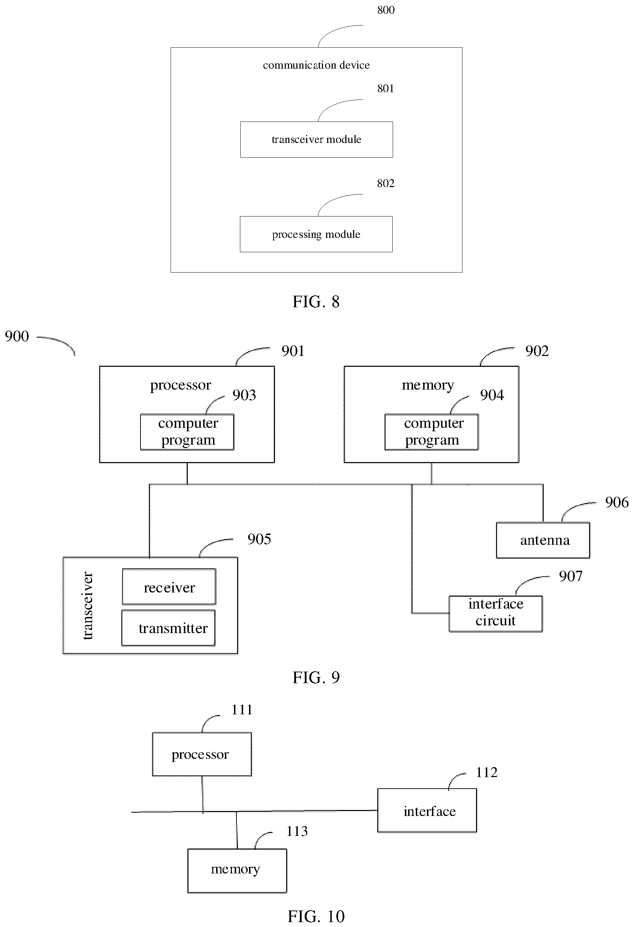

Referring to Figure 8, which is a schematic structural diagram of a communication device 800 provided by an embodiment of the present disclosure. The communication device 800 shown in Figure 8 may include a transceiver module 801 and a processing module 802. The transceiver module 801 may include a sending module and/or a receiving module. The sending module is used to implement the sending function, and the receiving module is used to implement the receiving function. The transceiver module 801 may implement the sending function and/or the receiving function.

The communication device 800 may be a terminal, a device in the terminal, or a device that can be used in conjunction with the terminal. Alternatively, the communication device 800 may be a network device, a device in a network device, or a device that can be used in conjunction with the network device.

When the communication device 80 is a terminal:

the processing module 802 is configured to determine, according to a predetermined offset value, location information of a control resource corresponding to control information to be detected, the control information being used to schedule data transmission of multi-cell or multi-carrier.

Optionally, the transceiver module 801 is configured to receive first indication information sent by a network device, the first indication information being used to indicate the predetermined offset value.

Optionally, the processing module 802 is also configured to:

determine the location information of the control resource corresponding to the control information to be detected, according to one predetermined offset value indicated by the indication information; or,

determine location information of a control resource corresponding to control information to be detected for scheduling data transmission of each cell, according to a correspondence relationship between each cell and a predetermined offset value and multiple predetermined offset values indicated by the first indication information; or,

determine location information of a control resource corresponding to control information to be detected for scheduling data transmission of each carrier, according to a correspondence relationship between each carrier and a predetermined offset value and multiple predetermined offset values indicated by the first indication information.

Optionally, the transceiver module 801 is further configured to: second indication information sent by the network device, wherein the second indication information is used to indicate at least one of:

the correspondence relationship between each cell and a predetermined offset value, a correspondence relationship between each cell group and a predetermined offset value, the correspondence relationship between each carrier and a predetermined offset value, or a correspondence relationship between each carrier group and a predetermined offset value.

Optionally, the processing module 802 is further configured to:

determine the predetermined offset value according to an agreement; or,

determine the predetermined offset value according to a predetermined rule.

Optionally, the predetermined rule includes any of:

determining a value of a carrier indication field (CIF) of a cell with a smallest identification value among the multi-cell as the predetermined offset value;

determining a value of a CIF of a cell with a largest identification value among the multi-cell as the predetermined offset value;

determining a value of a CIF of a carrier with a smallest identification value among the multi-carrier as the predetermined offset value;

determining a value of a CIF of a carrier with a largest identification value among the multi-carrier as the predetermined offset value;

determining a value of a CIF of a cell with a lowest frequency domain location among the multi-cell as the predetermined offset value;

determining a value of a CIF of a carrier with a lowest frequency domain location among the multi-carrier as the predetermined offset value;

determining a value of a CIF of a cell with a highest frequency domain location among the multi-cell as the predetermined offset value; or,

determining a value of a CIF of a carrier with a highest frequency domain location among the multi-carrier as the predetermined offset value.

In the embodiments of the present disclosure, the terminal can determine a search space for detecting control information used to schedule the multi-cell or multi-carrier data transmission according to the predetermined offset value. As a result, it is effectively realized that the terminal can accurately detect the control information used for multi-cell or multi-carrier scheduling, which reduces the probability of congestion of control information on different cells or carriers.

When the communication device 800 is a network device:

the processing module 802 is configured to determine, according to a predetermined offset value, location information of a control resource corresponding to control information to be detected by a terminal, the control information being used to schedule data transmission of multi-cell or multi-carrier for the terminal.

Optionally, the processing module 102 is also configured to: based on the configuration information, determine at least one scheduled cell and a detection time of the scheduled cell, or determine at least one scheduled carrier and a detection time of the scheduled carrier; send the scheduling information in the scheduled cell or the scheduled carrier.

Optionally, the processing module 102 is further configured to:

determine the predetermined offset value according to an agreement; or,
determine the predetermined offset value according to a predetermined rule.

Optionally, the predetermined rule includes any of:

determining a value of a carrier indication field (CIF) of a cell with a smallest identification value among the multi-cell as the predetermined offset value;

determining a value of a CIF of a cell with a largest identification value among the multi-cell as the predetermined offset value;

determining a value of a CIF of a carrier with a smallest identification value among the multi-carrier as the predetermined offset value;

determining a value of a CIF of a carrier with a largest identification value among the multi-carrier as the predetermined offset value;

determining a value of a CIF of a cell with a lowest frequency domain location among the multi-cell as the predetermined offset value;

determining a value of a CIF of a carrier with a lowest frequency domain location among the multi-carrier as the predetermined offset value;

determining a value of a CIF of a cell with a highest frequency domain location among the multi-cell as the predetermined offset value; or,

determining a value of a CIF of a carrier with a highest frequency domain location among the multi-carrier as the predetermined offset value.

Optionally, the transceiver module 801 is configured to: send first indication information to the terminal, the first indication information being used to indicate the predetermined offset value.

Optionally, the first indication information indicates one or more predetermined offset values.

Optionally, the transceiver module 101 is also configured to send second indication information to the terminal, in which the second indication information is used to indicate at least one of:

a correspondence relationship between each cell and a predetermined offset value, a correspondence relationship between each cell group and a predetermined offset value, a correspondence relationship between each carrier and a predetermined offset value, or a correspondence relationship between each carrier group and a predetermined offset value.

In the embodiments of the present disclosure, the network device may determine a search space for distributing the control information for scheduling multi-cell or multi-carrier data transmission based on the predetermined offset value. This contributes to effective realization of joint scheduling of multi-cell or multi-carrier scheduling, and reduces the probability of congestion of control information on different cells or carriers.

Referring to Figure 9, which is a schematic structural diagram of another communication device 900 provided by an embodiment of the present disclosure. The communication device 900 may be a network device, a terminal (such as the terminal in the foregoing method embodiments), a chip, a chip system, a processor, etc., that supports the network device to implement the above methods, or a chip, chip system, a processor, etc., that supports the terminal to implement the above methods. The device can be used to implement the methods described in the above method embodiments. For details, reference can be made to the description in the above method embodiments.

The communication device 900 may include one or more processors 901. The processor 901 may be a general processor or a dedicated processor, or the like. For example, it can be a baseband processor or a central processing unit. The baseband processor can be used to process communication protocols and communication data. The central processor can be used to control communication devices (such as base stations, baseband chips, terminals, terminal chips, DUs or CUs, etc.), to execute computer programs, and to process data of the computer programs.

Optionally, the communication device 900 may also include one or more memories 902, on which a computer program 904 may be stored. The processor 901 executes the computer program 904, so that the communication device 900 performs the steps described in the above method embodiments. Optionally, the memory 902 may also store data. The communication device 900 and the memory 902 can be provided separately or integrated together.

Optionally, the communication device 900 may also include a transceiver 905 and an antenna 906. The transceiver 905 may be called a transceiver unit, a transceiver, a transceiver circuit, etc., and is configured to implement the transceiver function. The transceiver 905 may include a receiver and a transmitter. The receiver may be called a receiving machine or a receiving circuit, etc., and is used to implement the receiving function; the transmitter may be called a transmitting machine, a transmitting circuit, etc., and is used to implement the transmitting function.

Optionally, the communication device 900 may also include one or more interface circuits 907. The interface circuit 907 is used to receive code instructions and transmit the code instructions to the processor 904. The processor 901 executes the code instructions to cause the communication device 900 to perform the method s described in the above method embodiments.

In one implementation, the processor 901 may include a transceiver for implementing receiving and transmitting functions. For example, the transceiver may be a transceiver circuit, an interface, or an interface circuit. The transceiver circuits, interfaces or interface circuits used to implement the receiving and transmitting functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 901 may store a computer program 903. The computer program 903 is run on the processor 901, causing the communication device 900 to perform the methods described in the above method embodiments. The computer program 903 may be solidified in the processor 901, in which case the processor 901 may be implemented by hardware.

In one implementation, the communication device 900 may include circuits. The circuits may implement the sending, receiving or communicating function in the preceding method embodiments. The processor and transceiver described in the present disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal (e.g., the terminal in the above method embodiments), but the scope of the communication device described in the disclosure is not limited thereto, and the structure of the communication device may not be limited by Figure 9. The communication device may be a stand-alone device or may be part of a larger device. For example, the described communication device may be:

(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

For a case where the communication device may be a chip or a chip system, referring to a schematic structural diagram of a chip shown in Fig. 10. The chip shown in Fig. 10 includes a processor 111 and an interface 112. The number of processors 111 may be one or more, and the number of interfaces 112 may be multiple.

For a case where the chip is configured to implement the functions of the terminal in the embodiments of the present disclosure: the interface 112 is used to implement S301, S302, etc. shown in Fig. 3.

The processor 111 is configured to implement S201 shown in Fig. 2, or to implement S303 shown in Fig. 3, or to implement S401 and S402 shown in Fig. 4, etc.

For a case where the chip is configured to implement the functions of the network device in the embodiments of the present disclosure:

the interface 112 is configured to implement S603 in Fig. 6, or is configured to implement S703 in Fig. 7, etc.
the processor 111 is configured to implement S501 in Fig. 5, or is configured to implement S601 and S602 in Fig. 6, or is configured to implement S701 and S702 in Fig. 7, etc.

Optionally, the chip also includes a memory 113, the memory 113 being used to store necessary computer programs and data.

The chip is configured to implement the functions of any of the above method embodiments when executed.

Those skilled in the art can also understand that the various illustrative logical blocks and steps listed in the embodiments of the present disclosure can be implemented by electronic hardware, computer software, or a combination of both. Whether such functionality is implemented in hardware or software depends on the specific application and overall system design requirements. Those skilled in the art can use various methods to implement the described functions for each specific application, but such implementations should not be understood as exceeding the protection scope of the embodiments of the present disclosure.

Embodiments of the present disclosure also provide a system for determining a search space. The system includes a communication device as a terminal (such as the terminal in the foregoing method embodiments) and a communication device as a network device in the embodiment of FIG. 8. Alternatively, the system includes a communication device as a terminal (such as the terminal in the foregoing method embodiments) and a communication device as a network device in the embodiment of FIG. 9.

The present disclosure also provides a readable storage medium on which instructions are stored. When the instructions are executed by a computer, the functions of any of the above method embodiments are implemented.

The present disclosure also provides a computer program product, which, when executed by a computer, implements the functions of any of the above method embodiments.

In the above embodiments, it may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general computer, a dedicated computer, a computer network, or other programmable devices. The computer program may be stored in a computer-readable storage medium, or may be transferred from one computer-readable storage medium to another, for example, the computer program may be transmitted from a website, computer, server, or data center to another website, computer, server or data center through wired (such as coaxial cable, optical fiber, digital subscriber line (DSL)) or wireless (such as infrared, wireless, microwave, etc.) means. The computer-readable storage medium may be any usable medium that can be accessed by a computer, or a data storage device, such as a server, data center, etc., that contains one or more available media integrated. The available media may be magnetic media (e.g., a floppy disk, a hard disk, or a tape), optical media (e.g., a high-density digital video disc (DVD)), or semiconductor media (e.g., a solid state disk (SSD)) etc.

Those skilled in the art understand that "first", "second", and other various numerical numbers involved in the present disclosure are only described for the convenience of differentiation, and are not used to limit the scope of the embodiments of the disclosure, or indicate the order of precedence.

The term "at least one" in the present disclosure may also be described as one or more, and the term "multiple" may be two, three, four, or more, which is not limited in the disclosure. In the embodiments of the present disclosure, for a type of technical features, "first" , "second", and "third", and "A", "B", "C" and "D" are used to distinguish different technical features of the type, the technical features described using the "first", "second", and "third", and "A", "B", "C" and "D" do not indicate any order of precedence or magnitude.

The correspondence relationships shown in each table in the present disclosure can be configured or predefined. The values of the information in each table are only examples and can be configured as other values, which are not limited by the present disclosure. When configuring the correspondence between information and each parameter, it is not necessarily required to configure all the correspondences shown in each table. For example, in the table in the present disclosure, the correspondence relationships shown in some rows may not be configured. For another example, appropriate deformation adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as arrays, queues, containers, stacks, linear lists, pointers, linked lists, trees, graphs, structures, classes, heaps, hash tables, and the like.

Predefinition in the present disclosure can be understood as definition, pre-definition, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution s. The person skilled in the art may implement the described functionality using different methods for each specific application, but such implementations should not be considered beyond the scope of the present disclosure.

Those skilled in the art can clearly understand that for the convenience and simplicity of description, the specific working processes of the systems, devices and units described above can be referred to the corresponding processes in the foregoing method embodiments, and will not be described again here.

The above are only specific embodiments of the present disclosure, but the protection scope of the present disclosure is not limited thereto. Any person familiar with the technical field can easily think of changes or substitutions within the technical scope disclosed in the present disclosure. Therefore, the protection scope of the present disclosure should be subject to the protection scope of the claims.

**Claims**

1. A method for determining location information of a control resource, performed by a terminal, comprising: determining, according to a predetermined offset value, location information of a control resource corresponding to control information to be detected, the control information being used to schedule data transmission of multiple cells or multiple carriers.

2. The method of claim 1, further comprising: receiving first indication information sent by a network device, the first indication information being used to indicate the predetermined offset value.

3. The method of claim 2, wherein determining, according to the predetermined offset value, the location information of the control resource corresponding to the control information to be detected comprises:

   determining the location information of the control resource corresponding to the control information to be detected, according to one predetermined offset value indicated by the indication information;
   determining the location information of the control resource corresponding to the control information to be detected for scheduling data transmission of each cell, according to a correspondence relationship between each cell and a predetermined offset value and multiple predetermined offset values indicated by the first indication information; or
   determining the location information of the control resource corresponding to the control information to be detected for scheduling data transmission of each carrier, according to a correspondence relationship between each carrier and a predetermined offset value and multiple predetermined offset values indicated by the first indication information.

4. The method of claim 3, further comprising: receiving second indication information sent by the network device, wherein the second indication information is used to indicate at least one of: the correspondence relationship between each cell and a predetermined offset value, a correspondence relationship between each cell group and a predetermined offset value, the correspondence relationship between each carrier and a predetermined offset value, or a correspondence relationship between each carrier group and a predetermined offset value.

5. The method of claim 1, further comprising:

   determining the predetermined offset value according to an agreement; or
   determining the predetermined offset value according to a predetermined rule.

6. The method of claim 5, wherein the predetermined rule comprises any one of:

   determining a value of a carrier indication field (CIF) of a cell with a smallest identification value among the multiple cells as the predetermined offset value;
   determining a value of a CIF of a cell with a largest identification value among the multiple cells as the predetermined offset value;
   determining a value of a CIF of a carrier with a smallest identification value among the multiple carriers as the predetermined offset value;
   determining a value of a CIF of a carrier with a largest identification value among the multiple carriers as the predetermined offset value;
   determining a value of a CIF of a cell with a lowest frequency domain location among the multiple cells as the predetermined offset value;
   determining a value of a CIF of a carrier with a lowest frequency domain location among the multiple carriers as the predetermined offset value;
   determining a value of a CIF of a cell with a highest frequency domain location among the multiple cells as the predetermined offset value; or
   determining a value of a CIF of a carrier with a highest frequency domain location among the multiple carriers as the predetermined offset value.

7. A method for determining location information of a control resource, performed by a network device, comprising:

determining, according to a predetermined offset value, location information of a control resource corresponding to control information to be detected by a terminal, the control information being used to schedule data transmission of multiple cells or multiple carriers for the terminal.

8. The method of claim 7, further comprising:

determining the predetermined offset value according to an agreement; or
determining the predetermined offset value according to a predetermined rule.

9. The method of claim 8, wherein the predetermined rule comprises any one of:

determining a value of a carrier indication field (CIF) of a cell with a smallest identification value among the multiple cells as the predetermined offset value;
determining a value of a CIF of a cell with a largest identification value among the multiple cells as the predetermined offset value;
determining a value of a CIF of a carrier with a smallest identification value among the multiple carriers as the predetermined offset value;
determining a value of a CIF of a carrier with a largest identification value among the multiple carriers as the predetermined offset value;
determining a value of a CIF of a cell with a lowest frequency domain location among the multiple cells as the predetermined offset value;
determining a value of a CIF of a carrier with a lowest frequency domain location among the multiple carriers as the predetermined offset value;
determining a value of a CIF of a cell with a highest frequency domain location among the multiple cells as the predetermined offset value; or
determining a value of a CIF of a carrier with a highest frequency domain location among the multiple carriers as the predetermined offset value.

10. The method of any one of claims 7-9, further comprising:
sending first indication information to the terminal, the first indication information being used to indicate the predetermined offset value.

11. The method of claim 10, wherein the first indication information indicates one or more predetermined offset values.

12. The method of claim 11, further comprising:
sending second indication information to the terminal, wherein the second indication information is used to indicate at least one of:
a correspondence relationship between each cell and a predetermined offset value, a correspondence relationship between each cell group and a predetermined offset value, a correspondence relationship between each carrier and a predetermined offset value, or a correspondence relationship between each carrier group and a predetermined offset value.

13. A terminal, comprising:
a processing module, configured to determine, according to a predetermined offset value, location information of a control resource corresponding to control information to be detected, the control information being used to schedule data transmission of multiple cells or multiple carriers.

14. A network device, comprising:
a processing module, configured to determine, according to a predetermined offset value, location information of a control resource corresponding to control information to be detected by a terminal, the control information being used to schedule data transmission of multiple cells or multiple carriers of the terminal.

15. A communication device, comprising a processor and a memory having stored a computer program, wherein when the computer program stored in the memory is executed by the processor, the device is caused to implement the method of any one of claims 1-6.

16. A communication device, comprising a processor and a memory having stored a computer program, wherein when the computer program stored in the memory is executed by the processor, the device is caused to implement the method of any one of claims 7-12.

17. A communication device, comprising: a processor and an interface circuit,

wherein the interface circuit is configured to receive code instructions and send the code instructions to the processor; and
the processor is configured to run the code instructions to perform the method of any one of claims 1-6.

18. A communication device, comprising: a processor and an interface circuit,

wherein the interface circuit is configured to receive code instructions and send the code instructions to the processor; and
the processor is configured to run the code instructions to perform the method of any one of claims 7-12.

19. A computer-readable storage medium for storing instructions, wherein when the instructions are executed, the method of any one of claims 1-6 is implemented.

20. A computer-readable storage medium for storing instructions, wherein when the instructions are executed, the method of any one of claims 7-12 is implemented.

Network device 11                    Terminal 12

FIG. 1

| location information of a control resource corresponding to control information to be detected is determined according to a predetermined offset value, the control information being used to schedule data transmission of multi-cell or multi-carrier | S201 |

FIG. 2

| first indication information sent by a network device is received, the first indication information being used to indicate the predetermined offset value | 301 |

| second instruction information sent by the network device is received | 302 |

| location information of multiple control resources corresponding to the control information to be detected for scheduling data transmission of each cell is determined according to the correspondence relationship between each cell and a predetermined offset value and the multiple predetermined offset values indicated by the first indication information | 303 |

FIG. 3

| the predetermined offset value is determined according to an agreement | S304 |

| location information of a control resource corresponding to control information to be detected is determined according to the predetermined offset value, the control information being used to schedule data transmission of multi-cell or multi-carrier | S305 |

FIG. 3a

a predetermined offset value is determined according to a predetermined rule — S401

location information of a control resource corresponding to control information to be detected is determined according to the predetermined offset value, the control information being used to schedule data transmission of multi-cell or multi-carrier — S402

FIG. 4

location information of a control resource corresponding to control information to be detected by a terminal is determined according to the predetermined offset value, the control information being used to schedule data transmission of multi-cell or multi-carrier for the terminal — S501

FIG. 5

the predetermined offset value is determined according to an agreement — S601

location information of a control resource corresponding to control information to be detected by a terminal is determined according to the predetermined offset value, the control information being used to schedule data transmission of multi-cell or multi-carrier for the terminal — S602

first indication information is sent to the terminal, the first indication information being used to indicate the predetermined offset value — S603

FIG. 6

a predetermined offset value is determined according to a predetermined rule — S701

location information of a control resource corresponding to control information to be detected by the terminal is determined according to the predetermined offset value, the control information being used to schedule data transmission of multi-cell or multi-carrier for the terminal — S702

first indication information is sent to the terminal, the first indication information being used to indicate the predetermined offset value — S703

FIG. 7

800

communication device

801

transceiver module

802

processing module

FIG. 8

900

901 processor

903 computer program

902 memory

904 computer program

906 antenna

905 receiver

transceiver

transmitter

907 interface circuit

FIG. 9

111 processor

112 interface

113 memory

FIG. 10

## INTERNATIONAL SEARCH REPORT

| International application No. |
| --- |
| **PCT/CN2022/100580** |

**A.    CLASSIFICATION OF SUBJECT MATTER**

H04L 5/00(2006.01)i;   H04W 72/00(2009.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT, CNKI, ENTXT, VEN: 资源, 偏移, 载波指示域, 控制信息, 位置, resource, offset, carrier, indication, location, control, message

**C.    DOCUMENTS CONSIDERED TO BE RELEVANT**

| Category* | Citation of document, with indication, where appropriate, of the relevant passages | Relevant to claim No. |
| --- | --- | --- |
| X | US 2021050985 A1 (QUALCOMM INC.) 18 February 2021 (2021-02-18) description, paragraphs [0081]-[0110], and figures 9-10 | 1, 2, 5, 7, 8, 10, 11, 13-20 |
| A | US 2021050985 A1 (QUALCOMM INC.) 18 February 2021 (2021-02-18) entire document | 3, 4, 6, 9, 12 |
| A | CN 110474749 A (HUAWEI TECHNOLOGIES CO., LTD.) 19 November 2019 (2019-11-19) entire document | 1-20 |
| A | CN 102264130 A (HUAWEI TECHNOLOGIES CO., LTD.) 30 November 2011 (2011-11-30) entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 August 2022** | **24 August 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/100580**

| Patent document cited in search report | | | Publication date (day/month/year) | Patent family member(s) | | | Publication date (day/month/year) |
|---|---|---|---|---|---|---|---|
| US | 2021050985 | A1 | 18 February 2021 | WO | 2021034656 | A1 | 25 February 2021 |
| | | | | EP | 4014623 | A1 | 22 June 2022 |
| | | | | TW | 202110258 | A | 01 March 2021 |
| | | | | CN | 114175808 | A | 11 March 2022 |
| CN | 110474749 | A | 19 November 2019 | WO | 2019214586 | A1 | 14 November 2019 |
| CN | 102264130 | A | 30 November 2011 | WO | 2011150721 | A1 | 08 December 2011 |

Form PCT/ISA/210 (patent family annex) (January 2015)